# EUROPEAN PATENT APPLICATION

(11) **EP 4 194 134 A1**
(43) Date of publication of application: **14.06.2023**
(21) Application number: 21020627.2
(22) Date of filing: 09.12.2021
(51) Int. Cl.: B23K 9/235, B23K 9/32, B33Y 10/00

(54) **METHOD AND DEVICE FOR REMOVING IMPURITIES FROM A FEEDSTOCK WIRE**

(71) Applicant: Linde GmbH, 82049 Pullach (DE)
(72) Inventor: Hibbitt, Ian, 82049 Pullach (DE); Coroado, Julio, 82049 Pullach (DE)
(74) Representative: Gellner, Bernd

(57) **Abstract**

The present invention relates to a method of removing an impurity from a surface of a feedstock wire prior to an additive manufacturing (AM) process comprising the steps of providing a source of the feedstock wire, wherein the source of the feedstock wire comprises a wire spool; and providing an impurity removing chamber around the feedstock wire, wherein the impurity removal chamber is located between the wire spool and a deposition head.

## Description

The present invention relates to a method and to a device for removing impurities from a surface of a feedstock wire prior to an additive manufacturing (AM) process. In particular, but not exclusively, the present invention relates to directed energy deposition additive manufacturing processes.

Additive manufacturing can be performed in various manners using a variety of heat sources and materials. The present invention is related to additive manufacturing using a metal wire or powder as the feedstock material and a laser, an electron beam or an arc as a heat source that melts the feedstock material as it is deposited.

This broad family of processes is often referred to as "directed energy deposition", or DED. One method of DED for which the present invention is particularly well-suited is wire arc additive manufacturing, in which the feedstock material is a wire and the heat source is an electrical arc. However, it will be understood that the present invention may be equally applicable to use with other DED methods.

It is understood that it is also possible to use an electron beam to melt welding wire (Metal wire-based systems; wire arc additive manufacturing "WAAM") onto a surface to build up a part. This is similar to the common 3D printing process of fused deposition modeling, but with metal, rather than plastics. With this process, an electron-beam gun provides the energy source used for melting metallic feedstock, which is typically wire. The electron beam is a highly efficient power source that can be both precisely focused and deflected using electromagnetic coils at rates well into thousands of hertz. With EBDM, feedstock material is fed into a molten pool created by the electron beam. Through the use of computer numeric controls (CNC), the molten pool is moved about on a substrate plate, adding material just where it is needed to produce the near net shape. This process is repeated in a layer-by-layer fashion, until the desired 3D shape is produced.

DED processes often use a process gas, directed coaxially or off-axis with a nozzle towards the arc or laser focus, in order to prevent air from reducing the quality of the built component through the effects that oxygen, nitrogen and moisture, all of which can have an adverse effect on the fusion process of the wire or powder under the high temperatures that are generated in order to melt and fuse the powder or wire. Then depending on the material used, the process gas can be an inert gas (e.g. argon, nitrogen), or a mixture of an inert gas with an active component in order to achieve certain effects (e.g. hydrogen).

Depending on the part being manufactured, deposition rates can range up to 200 cubic inches (3,300 cm³) per hour. With a light alloy, such as titanium, this translates to a real-time deposition rate of 40 pounds (18 kg) per hour.

A wide range of engineering alloys are compatible with the DED process and are readily available in the form of welding wire from an existing supply base. These include, but are not limited to, stainless steels, cobalt alloys, nickel alloys, copper nickel alloys, tantalum, titanium alloys, as well as many other high-value materials.

The feed wire that is fed to the point of deposition will have residual oxidation and other contaminants on the surface of the wire. It is well understood that the oxide layer (or other contaminant) on the surface of a wire used in the wire additive process may leave unwanted inclusions in the build. These inclusions reduce the material strength due to poor fusion of the material to previously deposited material. As the oxidation and contaminants will have a negative impact on build quality (causing inclusions and poor fusion of the material) they will need to be removed before they reach the deposition head. At present the quality of the feed wire relies on the operator to maintain the feed wire in good condition and limiting the amount of oxidation that may accrue on the wire prior to the use in the WAAM process.

It is an object of the present invention to provide a method and a device for removing impurities from the feedstock wire that at least partially mitigates the problems described above.

One or more of these problems are solved by a method according to independent claim 1 and by an apparatus according to independent claims 12 and 15. Advantageous embodiments are defined in the sub-claims.

According to an aspect of the present invention a method of removing an impurity from a surface of a feedstock wire prior to an AM process is provided, said method comprising the steps of:
- providing a source of the feedstock wire, wherein the source of the feedstock wire comprises a wire spool; and
- providing an impurity removing chamber around the feedstock wire,
wherein the impurity removal chamber is located between the wire spool and a deposition head.

Advantageously, the presence of the impurity removal chamber between the wire spool and the deposition head allows removal of the impurities at the point of need, prior to commencing the DED process, thus allowing the provision of feedstock wire with suitable properties, thus avoiding undesired effects caused by oxidation. Cleaning the wire just before the DED process commences allows using the same feedstock material without its properties being altered by an oxide layer. This, in turn, leads to an improved AM process with high repeatability and reproducibility.

In an embodiment, the impurity removal chamber comprises a closed system filled with a fluid. Advantageously, having a closed system facilitates maintenance and control of the desired atmosphere inside the impurity removal chamber.

In another embodiment, the fluid comprises an inert gas. Advantageously, the presence of the inert gas avoids undesired oxidation reactions. The inert gas can also perform the function of a carrier gas to deliver reducing components into the chamber.

In yet another embodiment, the fluid comprises a reducing gas. Advantageously, the presence of the reducing gas reduces the oxide layer formed on the feedstock wire when it passes through the impurity removal chamber.

In yet another embodiment, the fluid comprises the inert gas of and the reducing gas. Advantageously, it controls the amount of the reducing gas supplied into the impurity removing chamber, thus providing a metered amount of the reducing species sufficient to react with the oxide layer on the feedstock wire.

In an embodiment, the reducing gas comprises hydrogen or carbon monoxide. Advantageously, it efficiently reduces the oxide layer formed on the surface of the feedstock wire as the choice of reducing atmosphere is dictated by the composition of the wire and, in turn, oxides formed on its surface.

In another embodiment, the impurity removal chamber is heated to a predetermined temperature to remove impurities from the surface of the feedstock wire. Advantageously, heating the impurity removing chamber more efficiently removes the impurities compared to the reducing atmosphere alone. It is known that the reduction processes in metals and/or metal alloys occur faster than at room temperature, therefore heat-treatment combined with reduction allows better and faster impurity removal.

In an embodiment, the impurity removal chamber comprises an open system exposed to a working atmosphere. Advantageously, it allows the same working atmosphere to be used to cool down the feedstock wire during and after cleaning.

In another embodiment, the impurity removal chamber comprises an opening having a diameter, said diameter being sized to accommodate the feedstock wire, wherein the opening mechanically removes the impurity from the surface of the feedstock wire. Advantageously, it allows removal of the impurity from the surface of the wire by mechanical abrasion when the wire passes through the opening.

In yet another embodiment, the opening in the impurity removal chamber is purged with an inert gas. Advantageously, the flow of the inert gas on either side of the chamber acts as a lubricant for the wire to pass through the tight opening, as well as to cool down the whole structure to remove heat caused by friction of the wire over the sides of the opening.

In an embodiment, the inert gas is any one of argon, nitrogen, helium, or mixtures thereof. Advantageously, by using various gases it is possible to create an optimal inert atmosphere with the most suitable characteristics that are tailored to the material that is used to manufacture the part. Using the inert gas also prevents re-oxidation after the wire has left the wire spool.

According to another aspect of the present invention an apparatus for removing an impurity from a surface of a feedstock wire prior to an AM process is provided, said apparatus comprising an impurity removal chamber comprising a first opening and a second opening, wherein said first and second openings are configured to receive and pass through a feedstock wire, and wherein the impurity removal chamber is located between a wire spool and a deposition head.

In an embodiment, the impurity removal chamber further comprises an inlet and an outlet configured to provide an inert and/or a reducing gas into the chamber. Advantageously, it supplies the inert and/or reducing gas into the chamber and removes the reduction by-products from the chamber. It also allows to maintain constant controlled atmosphere inside the chamber.

In another embodiment, the apparatus further comprises a device for providing the inert gas to the first or the second opening to cool down and/or passivate the feedstock wire.

According to yet another aspect of the present invention, an apparatus for producing a component using an AM process is provided, said apparatus comprising:
- a manufacturing space;
- a heat source;
- a source of a feedstock wire;
- a source of a process gas;
- an apparatus for removing an impurity from a surface of the feedstock wire as claimed herein above.

The invention is explained below with the aid of figures which show:
Figure 1 - a schematic view of an additive manufacturing apparatus according to an embodiment of the present invention; and
Figure 2 - a schematic view of the impurity removal chamber according to an embodiment of the present invention.

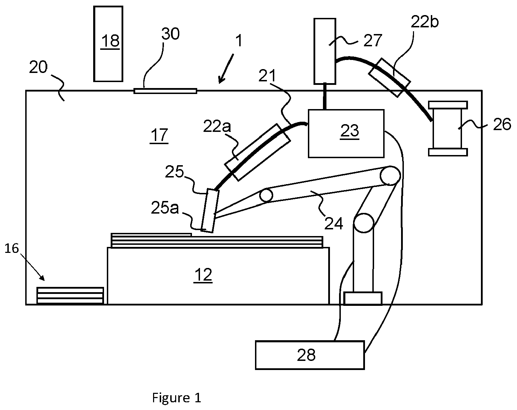

Figure 1 shows an apparatus for WAAM according to an embodiment of the present invention.

WAAM uses an electric arc as a heat source and solid wire rather than powder as feedstock. One of the advantages of WAAM technology is that it can be implemented using off-the-shelf welding equipment (GMAW, PLASMA ARC, GTAW etc.).

WAAM is advantageous for building large scale structures. The deposition rates (i.e. productivity levels) are several times better than using powder bed AM processes (kg per hour as opposed to grams per hour with powder based systems).

Manufacturing large components i.e. greater than 10 kg etc. in steel, aluminum, titanium and other metals is commonly undertaken using Wire Arc Additive Manufacturing.

The WAAM method has high deposition rates, relatively low material and equipment costs, and gives good mechanical properties, this makes Wire Arc Additive Manufacturing a suitable manufacturing process compared to using solid billets or large forgings, for low and medium complexity components. A number of components have already been successfully manufactured with this process, including Ti-6AI-4V spars and landing gear assemblies, aluminum wing ribs, steel wind tunnel models and cones.

The apparatus 1 comprises a welding machine 23 with a robot 24, a welding torch 25 having a deposition head 25a.

The apparatus is disposed in a process chamber 17 which can be an inert gas chamber. This process chamber 17 defines a manufacturing space 20. It is understood that the inert gas can be any one of argon, nitrogen, helium, or mixtures thereof.

A workbench (build platform) 12 with a substrate is provided in the process chamber 17.

A feedstock material is provided via a wire feeder 27. The feedstock material can be a feedstock wire 21, that is provided in a wire spool 26.

An impurity removal chamber 22a, 22b is provided within an apparatus 1, such as the feedstock wire 21 passes through the chamber before reaching the torch 25. It is understood that the impurities removal chamber 22a, 22b can be located anywhere between the wire spool 26 and the torch 25.

In one exemplary embodiment, the impurity removal chamber 22a is located after the welding machine 23 and before the deposition head 25a. In another exemplary embodiment, the impurity removal chamber 22b is located between the wire spool 26 and the welding machine 23. It would also be clear to the skilled person that more than one impurity removal chamber can be present in the apparatus 1.

A device 16 for feeding inert gas to the manufacturing space is connected to the processing chamber 17 of the apparatus 1. The device 16 for feeding liquid inert gas into the manufacturing space may be used to purge the manufacturing space 20 by introducing a unidirectional flow of gaseous inert gas into the manufacturing space 20, thereby causing the gas that is initially within the manufacturing space 20 to be displaced and flow out through the exhaust port 30.

A device for providing a process gas 18 is also connected to the processing chamber 17 via a corresponding conduit (not shown). As a process gas a reducing, or reacting, gas can be used in order to avoid oxidation of the built-up component.

Furthermore, an oxygen sensor (not shown) for measuring the proportion of oxygen (O₂) in the manufacturing space 20 is provided in the manufacturing space 20.

Once the purge of gas is completed, the apparatus 1 shown in figure 1 may be used to produce a three-dimensional part by conventional methods of additive manufacture, such as WAAM or other methods of additive manufacture in which a metal wire feedstock is heated or melted by a welding machine 23 controlled by a robot 24.

It is understood that the whole apparatus is controlled via a control unit 28.

In use, the controller is configured to initiate the movement of the feedstock wire 21 from the wire spool 26. The wire is then supplied into the welding machine 23 where it is subjected to heating or melting.

In order to remove impurities, the impurities removal chamber 22a, 22b can be used before the feedstock wire 21 reaches the deposition head 25a. The controller is configured to pass the feedstock wire 21 through the impurities removal chamber 22a, 22b where the wire is cleaned from the impurities and oxidation by-products.

After the wire passes through the impurities removal chamber, the controller is configured to supply the wire to the torch 25 and commence the deposition process.

It is also understood that the controller 28 controls the supply of the inert gas, as well as the process gas into the manufacturing space. If the oxygen sensor is present, the controller is configured to adjust the atmosphere inside the manufacturing space if the readings of the sensor exceed a pre-determined amount, 1 - 1,000 ppm for example.

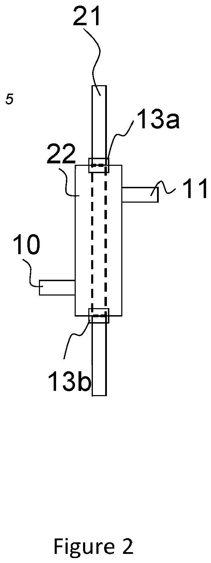

Figure 2 shows the impurity removal chamber 22 according to the embodiment of the present invention. The impurity removal chamber 22 may comprise at least one inlet 10 and at least one outlet 11 for providing a fluid inside the chamber. Said fluid can be an inert gas, a reducing gas, or a mixture thereof. Said reducing gas can be hydrogen or carbon monoxide. The purpose of the reducing gas is to remove the oxidation by-products from the feedstock wire 21 when the wire passes through the chamber 22. In this case the chamber comprises a closed structure where the inert and/or reducing gas(es) are contained inside the chamber 22 and their concentrations can be carefully controlled by the controller 28.

The controller 28 is further configured to heat the impurity removal chamber when the reducing gas is inside the chamber 22, in order to accelerate the reducing process. It is understood that the heating temperatures lie in the range of 200-1400 °C in order to achieve efficient impurities removal. It is understood that the selection of the temperature depends on the type of material the feedstock wire is made of. For example, for each material the maximum temperature should be 200 °C below the melting point.

It is however understood that the presence of the inlet 10 and outlet 11 is optional and the chamber can have an open structure wherein it is exposed to the atmosphere maintained inside the manufacturing space 20.

In an alternative embodiment, the impurity removal chamber comprises a first (13a) and second (13b) openings for the wire 21 to be passed through. The fist and second openings 10,11 are configured to have a diameter only slightly smaller that the wire. In this case, when the wire passes through the openings, the unwanted oxide layer is removed from the wire mechanically, by abrasion process. It will be understood that during such process the wire can be heated due to friction. To avoid overeating, a flow of the inert gas can be directed to the first and second openings 10, 11 in order to cool down and/or passivate the wire 21. Said inert gas can be, without limitation, any one of argon, nitrogen, helium, or mixtures thereof. The controller 28 is therefore configured to control the supply of the inert gas to the first and second openings and to control the speed of the wire to pass through the openings, as additional tension can be generated when the wire has to be pulled through the tight openings.

It is also understood by the skilled person that a combination of the mechanical abrasion and the supply of the reducing gas along with heat treatment can also be employed. Such a combination will lead to an even more efficient removal of the impurities from the feedstock wire 21.

When the wire 21 is cleaned from the impurities *in situ* in the way described herein before, it is possible to provide the same material properties, and thus provide reproducibility between the batches of feedstock wire, without the oxidation by-products affecting the fusion between the previously deposited material and the new material put on top.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

- 1 -: AM apparatus
- 10 -: inlet
- 11 -: outlet
- 12 -: built platform
- 13a, 13b -: first and second openings
- 16 -: feeding device
- 17 -: processing chamber
- 18 -: device for providing process gas
- 20 -: manufacturing space
- 21 -: feedstock wire
- 22, 22a, 22b -: impurity removal chamber
- 23 -: welding machine
- 24 -: robot
- 25 -: torch
- 25a -: deposition head
- 26 -: wire spool
- 27 -: wire feeder
- 28 -: controller
- 30 -: exhaust port

## Claims

1. A method of removing an impurity from a surface of a feedstock wire (21) prior to an additive manufacturing (AM) process comprising the steps of:
- providing a source of the feedstock wire, wherein the source of the feedstock wire comprises a wire spool (26); and
- providing an impurity removing chamber (22) around the feedstock wire, wherein the impurity removal chamber (22) is located between the wire spool (26) and a deposition head (25a).

2. The method of claim 1, wherein the impurity removal chamber (22) comprises a closed system filled with a fluid.

3. The method of claim 2, wherein the fluid comprises an inert gas.

4. The method of claim 2, wherein the fluid comprises a reducing gas.

5. The method of claim 1, wherein the fluid comprises the inert gas of claim 3 and the reducing gas of claim 4.

6. The method of claim 4 or 5, wherein the reducing gas comprises hydrogen or carbon monoxide.

7. The method of any preceding claim, wherein the impurity removal chamber (22) is heated to a predetermined temperature to remove impurity from the surface of the feedstock wire (21).

8. The method of claim 1, wherein the impurity removal chamber (22) comprises an open system exposed to a working atmosphere.

9. The method of claim 8, wherein the impurity removal chamber (22) comprises an opening having a diameter, said diameter being sized to accommodate the feedstock wire (22), wherein the opening mechanically removes the impurity from the surface of the feedstock wire.

10. The method of claim 9, wherein the opening in the impurity removal chamber is purged with an inert gas.

11. The method of claim 3 or 10, wherein the inert gas is any one of argon, nitrogen, helium, or mixtures thereof.

12. An apparatus for removing an impurity from a surface of a feedstock wire prior to an AM process, said apparatus comprising an impurity removal chamber (22) comprising a first opening (13a) and a second opening (13b),
wherein said first and second openings (13a, 13b) are configured to receive and pass through a feedstock wire (21), and
wherein the impurity removal chamber (22) is located between a wire spool (26) and a deposition head (25a).

13. The apparatus of claim 12, wherein the impurity removal chamber (22) further comprises an inlet (10) and an outlet (11) configured to provide an inert and/or a reducing gas into the chamber (22).

14. The apparatus of claim 12 or claim 13 further comprising a device for providing the inert gas to the first or the second opening to cool down and/or passivate the feedstock wire.

15. An apparatus for producing a component using an AM process, said apparatus comprising:
- a manufacturing space (20);
- a heat source;
- a source of a feedstock wire;
- a source of a process gas;
- an apparatus for removing an impurity from a surface of the feedstock wire as claimed in claims 12-14.
